# EUROPÄISCHE PATENTSCHRIFT

(11) **EP 2 296 237 B1**
(45) Veröffentlichungstag und Bekanntmachung des Hinweises auf die Patenterteilung: **08.10.2014**
(21) Anmeldenummer: 10172653.7
(22) Anmeldetag: 12.08.2010
(51) Int. Cl.: H01R 25/14, H01R 31/06, H01R 9/26, H01R 25/16

(54) **Adapter zur Aufnahme elektrischer Installationsgeräte und zur Befestigung auf einem Stromschienensystem**
Adapter for holding electrical installation devices and for fixing to a power rail system
Adaptateur pour la réception d'appareils d'installation électriques et pour la fixation sur un système de barres conductrices

(30) Priorität: 14.09.2009 DE 102009029434
(43) Veröffentlichungstag der Anmeldung: 16.03.2011
(73) Patentinhaber: Wöhner GmbH & Co. KG Elektrotechnische Systeme, 96472 Rödental (DE)
(72) Erfinder: Büttner, Alex, 96472, Rödental (DE)
(74) Vertreter: Isarpatent

(56) Entgegenhaltungen:
- EP-A2- 1 764 872
- DE-B3- 10 315 503
- DE-B3-102005 009 857
- DE-C1- 19 836 383
- DE-U1- 29 615 341

## Beschreibung

Die Erfindung betrifft einen Adapter zur Aufnahme elektrischer Installationsgeräte und zur Befestigung auf einem Stromschienensystem.

Es sind bereits in einpoliger Ausführung Adapter bekannt, die auf Stromschienensysteme aufgesetzt werden können und auf ihrer Oberseite zur Aufnahme elektrischer Installationsgeräte ausgebildet sind. Ein derartiger Adapter weist ein Gehäuse auf mit Seitenwänden und einer die Oberseite bildenden Wand, an der L-förmige, zueinander abgewandte Schienen angeordnet sind, die zur Aufnahme eines elektrischen Installationsgerätes dienen. In den Seitenwänden des Gehäuses sind Aussparungen zum Aufsetzen auf Stromschienen ausgebildet. Ein solcher Adapter ist an einer vorbestimmten Position mit einem fest angeordneten Kontaktelement versehen, welches eine vorgegebene Stromschiene des Stromschienensystems kontaktieren soll. Ein weiteres Kontaktelement in Form einer Kontaktschiene befindet sich unterhalb der oberen Wand des Gehäuses und ist mit einem aus dem Gehäuse herausgeführten Verbindungskabel zum Anschluss an ein Installationsgerät versehen. Zur Befestigung des Adapters dienen innerhalb des Gehäuses in Längsrichtung des Gehäuses verschiebbare Füße. Durch eine aus dem Gehäuse herausreichende Handhabe lassen sich diese Füße zum Untergreifen von Stromschienen verschieben, wodurch der Adapter gegenüber den Stromschienen festgeklemmt wird. Ein solcher Adapter weist jeweils nur ein einziges Kontaktelement auf, welches zur Kontaktierung eines der Leiter L1, L2, L3, N oder PE vorgesehen ist, was bedeutet, dass zur Kontaktierung der unterschiedlichen Leiter Adapter mit unterschiedlich fest angeordneten Kontaktelementen bereitzustellen sind.

Ein Adapter der genannten Art ist aus DE 198 36 383 bekannt.

Der Erfindung liegt die Aufgabe zugrunde, einen Adapter der eingangs genannten Art zu schaffen, der zur Kontaktierung unterschiedlicher Leiter einstellbar ist.

Diese Aufgabe wird erfindungsgemäß gelöst durch einen Adapter zur Aufnahme elektrischer Installationsgeräte und zur Befestigung auf einem Stromschienensystem, mit einem Gehäuse aus Kunststoff, welches eine obere Gehäusewand aufweist, an welcher Mittel zur Halterung eines elektrischen Installationsgerätes vorgesehen sind, mit Füßen zur klemmenden Befestigung an dem Stromschienensystem, mit einem ersten Kontaktelement zum Anschluss des elektrischen Installationsgerätes, wobei das erste Kontaktelement zumindest weitgehend innerhalb des Gehäuses verläuft, und mit einem mit dem ersten Kontaktelement elektrisch verbundenen zweiten Kontaktelement zur Kontaktierung jeweils einer der Stromschienen eines Stromschienensystems, **dadurch gekennzeichnet, dass** das Gehäuse eine Führungsaufnahme aufweist, entlang welcher das zweite Kontaktelement innerhalb des Gehäuses verschiebbar vorgesehen ist, dass das zweite Kontaktelement eine Führungseinrichtung, die entlang der Führungsaufnahme (28) verlagerbar ist, sowie Rastmittel aufweist, und dass an vorbestimmten Rastpositionen des Gehäuses Rastaufnahmen vorgesehen sind, mit welchen die Rastmittel des zweiten Kontaktelementes in Eingriff bringbar sind.

Nach einer bevorzugten Ausführungsform ist der Adapter derart konzipiert, dass das erste Kontaktelement eine Kontaktschiene beinhaltet, die in dem Gehäuse unterhalb der oberen Gehäusewand verläuft und mit einer Anschlusseinrichtung versehen ist.

Nach einer weiteren Ausführungsform ist vorgesehen, dass das zweite Kontaktelement ein Aufnahmegehäuse aufweist, an welchem die Führungseinrichtung ausgebildet ist, dass die Führungsaufnahmen an den Innenflächen der Seitenwände des Gehäuses vorgesehen sind, entlang welchen das zweite Kontaktelement mittels seiner Führungseinrichtung verschiebbar ist. Bei einer weiteren Ausführungsform ist bei einem Adapter vorgesehen, dass das Aufnahmegehäuse des zweiten Kontaktelementes wenigstens zwei Öffnungen aufweist, dass in dem Aufnahmegehäuse Kontaktabschnitte eines Kontaktes des zweiten Kontaktelementes angeordnet sind und aus dem Aufnahmegehäuse zumindest teilweise herausragen.

Nach einer weiteren Ausgestaltung der Erfindung ist der Adapter **dadurch gekennzeichnet, dass** die Führungsaufnahmen als entlang der Innenflächen der Seitenwände des Gehäuses verlaufende Nuten gebildet sind und dass an den Rastpositionen des zweiten Kontaktelementes entsprechenden Stellen Nutabschnitte vorgesehen sind, die quer zur Führungsaufnahme verlaufen, in welche die Führungseinrichtungen des Aufnahmegehäuses verlagerbar sind, zur Positionierung des zweiten Kontaktelementes in einer vorgegebenen Betriebsposition.

Bei einem Adapter ist nach einer weiteren Gestaltung vorgesehen, dass die Führungseinrichtung auf einer Seite des Aufnahmegehäuses unterschiedlich zur Führungseinrichtung auf der anderen Seite des Aufnahmegehäuses ausgebildet ist.

Bei einer bevorzugten Ausgestaltung des Adapters sind die Rastmittel des zweiten Kontaktelements durch mindestens ein Paar von Füßen gebildet, die von dem Aufnahmegehäuse abstehen und die Rastaufnahmen sind im Gehäuse durch Durchbrechungen in der oberen Gehäusewand gebildet.

Bei einer bevorzugten Ausgestaltung sind die Führungseinrichtungen des zweiten Kontaktelementes durch ausgeschnittene, flexible Stege gebildet, auf welchen jeweils ein Vorsprung angeordnet ist.

Vorteilhafterweise sind bei dem Adapter die Rastmittel mit Rastzähnen versehen.

Zur Verbesserung der Führung ist bei einer Gestaltung des Adapters vorgesehen, dass vom Aufnahmegehäuse des zweiten Kontaktelementes zueinander beabstandete Fußabschnitte ausgebildet sind, deren Abstand etwas größer als die Breite des ersten Kontaktelementes ist, wodurch beim Verschieben des zweiten Kontaktelementes eine Führung desselben gegenüber dem schienenartigen ersten Kontaktelement gegeben ist.

Zum Einsetzen des zweiten Kontaktelementes ist die Führungsaufnahme in Form von parallel zur Achse des Gehäuses verlaufenden Nuten mit jeweils einem Paar von Einführungsnuten versehen, die senkrecht zur Führungsaufnahme stehen.

Der erfindungsgemäße Adapter ist vorzugsweise als einpoliger Adapter ausgelegt und besteht aus einem Gehäuse aus Kunststoff mit Seitenwänden und einer die Oberseite bildenden Wand, die etwa U-förmig zusammengesetzt sind bzw. einteilige Konstruktion haben, wobei entlang der Innenfläche der Seitenwände Führungsrillen ausgebildet sind, die vorzugsweise parallel zueinander verlaufen und zur Aufnahme von Führungseinrichtungen dienen, die seitlich an einer Seitenfläche des zweiten Kontaktelementes ausgebildet sind. Auf diese Weise lässt sich das zweite Kontaktelement innerhalb des U-förmigen Gehäuses verschieben, um an einer von mehreren vorgegebenen Positionen gegenüber dem Gehäuse verrastet zu werden, sodass die Kontaktierung einer vorbestimmten Stromschiene sichergestellt wird.

An den Innenflächen der Gehäusewände ist mindestens ein Paar von parallel zueinander verlaufendes, senkrecht zur Führungsaufnahme in Form von Führungsnuten ausgebildeter Führungsabschnitten vorgesehen, das jeweils senkrecht zur erstgenannten und in Längsrichtung des Gehäuses verlaufenden Führungsaufnahme verläuft, sodass das zweite Kontaktelement von außen und von der Unterseite des Gehäuses her in das Gehäuse eingesetzt werden kann.

Das zweite Kontaktelement besteht aus einem Aufnahmegehäuse aus Kunststoff, welches einen in wesentlichen U-förmigen Kontakt aufnimmt, der gemäß einer bevorzugten Ausführungsform eine Schraubenfeder enthält, welche die Kontaktschenkel des U-förmigen Kontaktes auseinanderdrückt. Das Aufnahmegehäuse ist mit Durchbrechungen versehen, sodass der U-förmige Kontakt über die Durchbrechungen mit dem ersten Kontaktelement in elektrischer Verbindung stehen kann und auf der gegenüberliegenden Seite einen elektrischen Kontakt zur jeweiligen Stromschiene bilden kann.

Nach einer ersten Ausführungsform ist das erste Kontaktelement in Form einer Stromschiene ausgebildet und an einem Ende des Gehäuses gekröpft, derart, dass ein etwa U-förmiger Anschlussabschnitt gebildet wird, während nach einer zweiten Ausführungsform das erste, im wesentlichen schienenförmige Kontaktelement mit einem flexiblen Anschlussleiter verbunden ist, wobei das gekröpfte Anschlusselement und das flexible Anschlusselement zur Verbindung mit einem Installationsgerät dienen.

Ein derartiger einpoliger Adapter kann durch am Gehäuse ausgebildete Kupplungselemente mit mindestens einem oder mehreren Adaptern zu einem Adaptermodul verbunden sein, wodurch bei Einsatz von fünf derartigen, zusammengesetzten Adaptern ein Adaptermodul geschaffen wird, welches die Kontaktierung von fünf Leitern L1 - L3, N, PE sicherstellt.

Zur Fixierung jedes Adapters auf dem Stromschienensystem ist nach einer weiteren Ausführungsform ein Sperrriegel vorgesehen, der senkrecht zur Längsrichtung des Adapters steht und nach Aufsetzen des Adapters auf das Stromschienensystem senkrecht zur Längsrichtung des Gehäuses verlagert wird, wodurch eine Verriegelung zumindest gegenüber einer Stromschiene erfolgt.

Im Folgenden werden bevorzugte Ausführungsformen des Adapters anhand der Zeichnung zur Erläuterung weiterer Merkmale beschrieben. Es zeigen:
- Figur 1:: Eine Perspektivansicht eines einpoligen Adapters gemäß einer bevorzugten Aus- führungsform,
- Figur 2:: eine im Teilschnitt dargestellte Perspektivansicht eines einpoligen Adapters ent- sprechend Figur 1 zusammen mit einem Installationsgerät und einem Strom- schienensystem,
- Figur 3:: eine Figur 2 entsprechende Darstellung, bei der das zweite Kontaktelement ge- genüber Figur 2 versetzt angeordnet ist,
- Figur 4:: eine Längsschnittansicht durch das Adaptermodul zur Veranschaulichung der Innenfläche einer Seitenwand,
- Figur 5:: eine Detaildarstellung des Adapters mit einem zweiten Kontaktelement in der in Figur 2 dargestellten Position, wobei das zweite Kontaktelement in Schnittan- sicht wiedergegeben ist,
- Figur 6:: eine Teilschnittdarstellung des zweiten Kontaktelements,
- Figur 7:: eine Perspektivdarstellung des zweiten Kontaktelements,
- Figur 8:: eine Schnittdarstellung einer weiteren Abwandlung des erfindungsgemäßen Adapters, und
- Figur 9:: eine Schnittdarstellung einer weiteren Ausführungsform des erfindungsgemäßen Adapters.

Im Folgenden werden bevorzugte Ausführungsformen des erfindungsgemäßen, vorzugsweise einpolig gestalteten Adapters beschrieben.

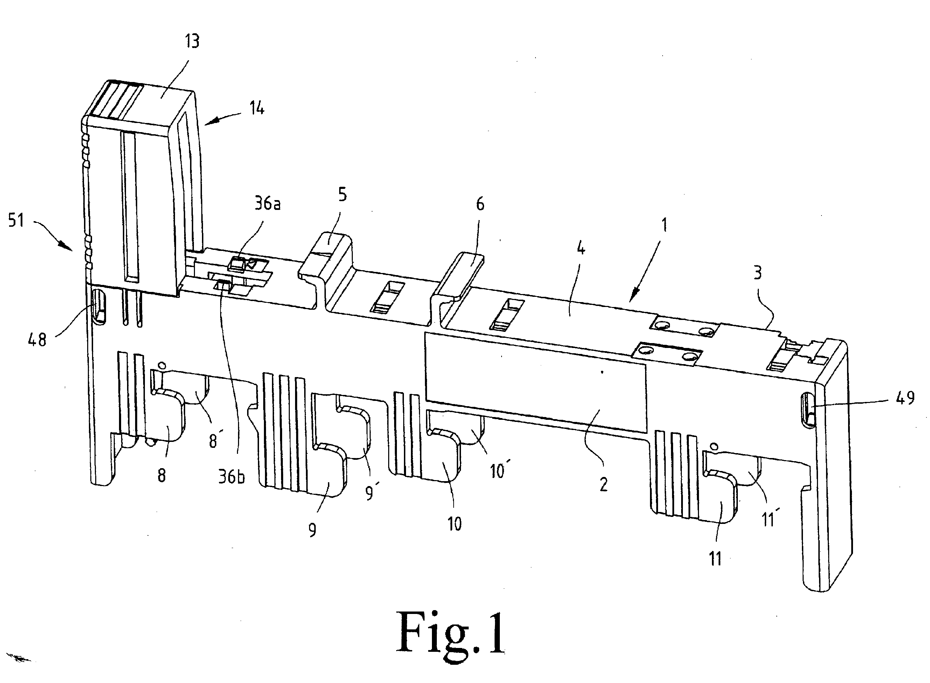

Figur 1 zeigt eine Perspektivansicht des Adapters, der ein Gehäuse 1 aus Kunststoff aufweist, welches vorzugsweise aus zwei seitlichen Gehäusewänden 2, 3 und einer oberen Gehäusewand 4 besteht. An der oberen Gehäusewand 4 befinden sich Schienen, vorzugsweise L-förmig zueinander entgegengesetzt gerichtete Schienen 5, 6, die zur Aufnahme eines Installationsgerätes dienen. An der Gehäusewand 2 streben nach unten mehrere Füße 8, 9, 10, 11 ab. Entsprechend ist die Seitenwand 3 mit Füßen 8', 9', 10', 11' versehen. Sämtliche Füße streben von der jeweiligen Seitenwand 2, 3 nach unten ab und die einzelnen Fußpaare 8, 8', 9, 9', 10, 10', 11, 11' sind parallel zueinander vorgesehen und zueinander beabstandet entsprechend dem Abstand der Seitenwände 2, 3. Die Füße 8, bis 11, 8' bis 11' dienen zum Aufsetzen des Adapters auf in Figur 1 nicht dargestellte Stromschienen.

Bei der in Figur 1 gezeigten bevorzugten Ausführungsform ist der Adapter an einem Ende mit einer vom Gehäuse 1 nach oben abstrebenden Aufnahmesäule 13 versehen, deren zum Gehäuse 1 weisende Seitenwand eine Durchbrechung 14, vorzugsweise schlitzförmige Durchbrechung beinhaltet, aus welcher ein beispielsweise gekröpfter Kontaktabschnitt eines noch zu erläuternden Kontaktes 23 herausragt, um in elektrischen Kontakt mit einem zu montierenden Installationsgerät verbracht werden zu können.

Das Gehäuse 1 ist bei der dargestellten Ausführungsform vorzugsweise nach unten geöffnet bzw. weist keine untere Gehäusewand auf, die den Gehäusehohlraum nach unten abschließt. Das Gehäuse hat daher im Wesentlichen U-förmigen Querschnitt.

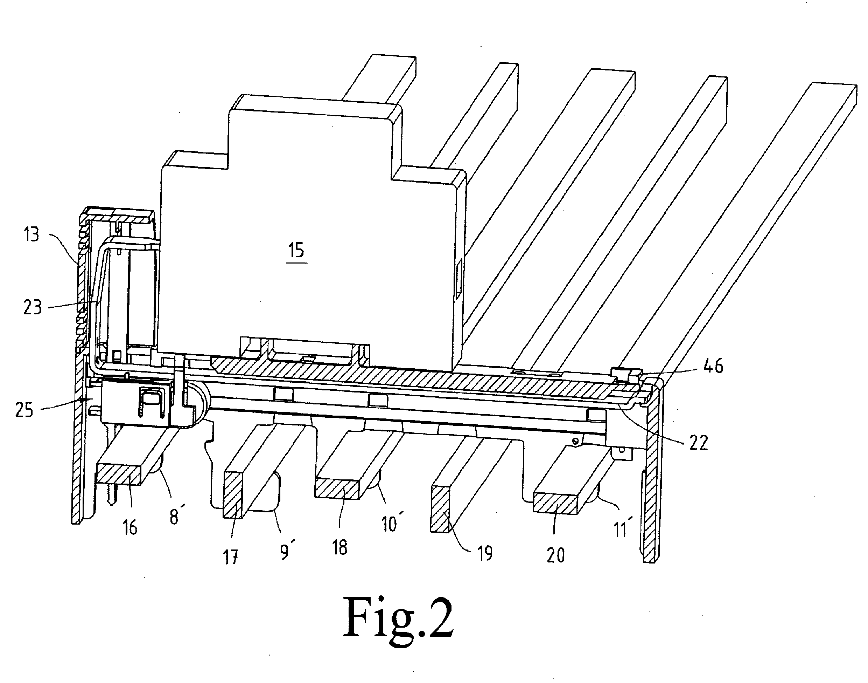

In Figur 2 ist der Adapter entsprechend Figur 1 in Schnittansicht dargestellt, wobei der Schnitt vertikal entlang der Längsachse des Gehäuses 1 vorgenommen ist, sodass die Seitenwand 3 von innen her ersichtlich ist. Außerdem sind in Figur 2 ein Installationsgerät 15 und die Stromschienen 16 bis 20 dargestellt, wobei die Stromschienen teilweise horizontal und teilweise vertikal ausgerichtet sein können. Der Adapter ist mittels seiner Füße 8', 9', 10', 11' gegenüber den Stromschienen 16 bis 20 fixiert. Die Füße 8', 9', 10', 11' untergreifen die jeweilige Stromschiene.

Die Darstellung nach Figur 2 zeigt ein erstes Kontaktelement 22, welches schienenförmig ausgebildet ist und in Längsrichtung des Adapters verläuft, wobei das erste Kontaktelement 22 unterhalb der oberen Wand 4 des Adapters angeordnet ist und seitlich einen L-förmig abgekröpften Abschnitt 23 besitzt, der im Wesentlichen innerhalb der Säule 13 angeordnet ist und aus dieser durch eine Durchbrechung 14 seitlich herausragt, um einen elektrischen Kontakt zu dem Installationsgerät 15 herstellen zu können.

Innerhalb des Adapters ist ein zweites Kontaktelement 25 verschiebbar angeordnet, welches gemäß Figur 2 einen elektrischen Kontakt zwischen der Stromschiene 16 und dem ersten Kontaktelement 22 herstellt und im Wesentlichen oberhalb der Stromschiene 16 innerhalb des Adapters vorgesehen ist. Das zweite Kontaktelement 25 weist ein Aufnahmegehäuse 32 auf, innerhalb welchem in noch zu beschreibender Weise ein metallischer Kontakt angeordnet ist.

Wie aus der Figur 2 hervorgeht, wird nach dem Einsetzen des zweiten Kontaktelements 25 in das Gehäuse 1 in der dort gezeigten Stellung ein Kontakt zwischen der Stromschiene 16 und dem ersten Kontaktelement 22 hergestellt, sodass eine elektrische Verbindung zwischen der Stromschiene 16 und dem Abschnitt 23 zum Installationsgerät 15 besteht. Das aus Figur 2 erkennbare Gehäuse entspricht einer Hälfte des Aufnahmegehäuses 32, wobei der vordere Abschnitt des Aufnahmegehäuses zur Verdeutlichung des Aufbaus und der Möglichkeit des Einsatzes des zweiten Kontaktelementes 25 weggeschnitten ist.

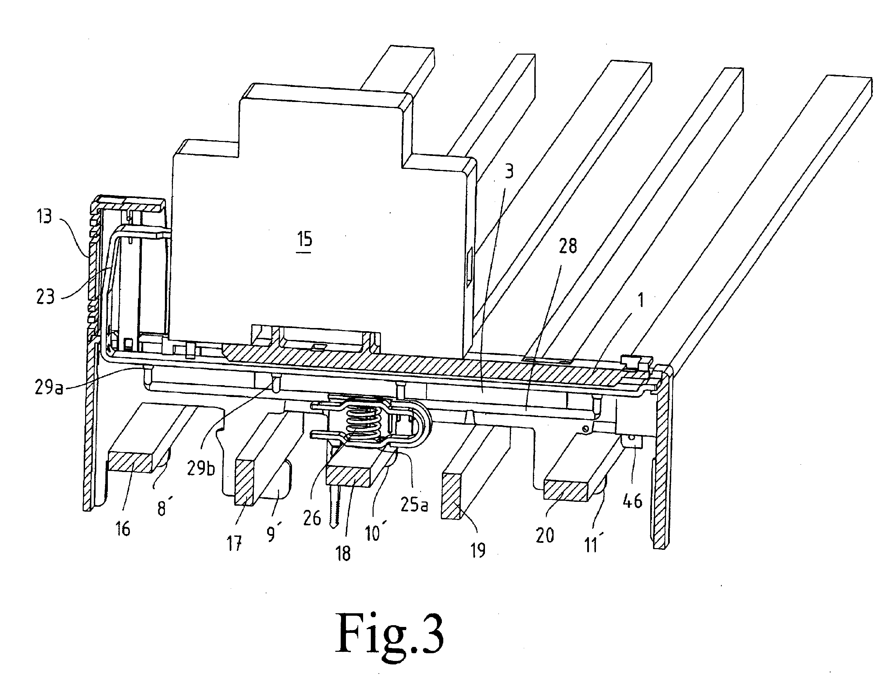

Figur 3 ist eine Figur 2 ähnliche Darstellung, in der das zweite Kontaktelement 25 an einer Position angeordnet ist, welche der Stromschiene 18 entspricht und bei der das Aufnahmegehäuse 32 des zweiten Kontaktelementes 25 im Schnitt unter Weglassung des vorderen Abschnittes dargestellt ist, wodurch ein im zweiten Kontaktelement 25 befindlicher, im Wesentlichen U-förmiger Kontakt 25a erkennbar ist. Der metallische Kontakt 25a nimmt vorzugsweise eine Schraubenfeder 26 auf, die bewirkt, dass die beiden Schenkel des Kontaktes 25 auseinander gespreizt werden und dadurch ein guter elektrischer Kontakt zwischen dem ersten Kontaktelement 22 und der Stromschiene 18 hergestellt wird. Anstelle der Schraubenfeder 26 können andere Federmittel verwendet werden, gegebenenfalls kann die Schraubenfeder 26 auch entfallen.

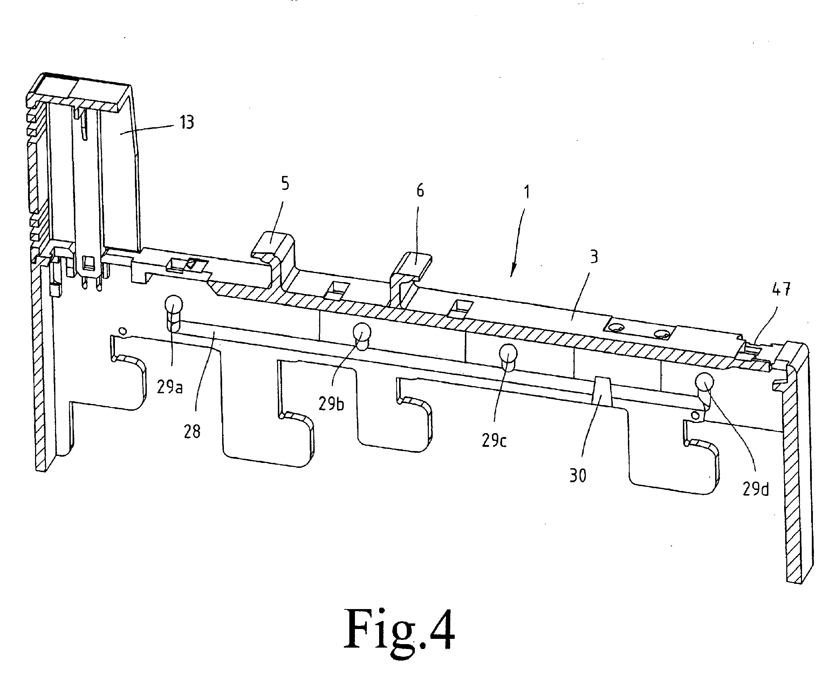

Die in Figur 3 erkennbare seitliche Gehäusewand 3 ist an ihrer nach innen weisenden Fläche mit einer Rille oder Nut 28 versehen, die nachfolgend als Nut bezeichnet ist und im Wesentlichen in der Längsrichtung des Gehäuses 1 verläuft. Diese Nut 28 hat die Funktion einer Führungsaufnahme, wie dies nachfolgend noch beschrieben wird. Die Nut 28 ist mit in vorgegebenen Abständen senkrecht von ihr (Figur 3) nach oben verlaufenden Nutabschnitten 29a, 29b 29c und 29d versehen. Einzelheiten dieser Nut 28 und der Nutabschnitte 29a, 29b, 29c und 29d ergeben sich aus Figur 4.

Die Nutabschnitte 29a bis 29d sind entlang dem Gehäuse 1 und insbesondere entlang der Gehäusewand 2 und 3 an vorbestimmten Positionen vorgesehen, derart, dass das zweite Kontaktelement 25 an diesen vorgegebenen Positionen fest in das Gehäuse 1 eingerastet werden kann, und zwar an Positionen, an welchen die Kontaktierung zwischen der jeweils gewünschten Stromschiene und dem ersten Kontaktelement 22 gewährleistet ist. Weiterhin steht die Nut 28 mit einer Einführungsnut 30 in Verbindung, die alternativ durch einen Schlitz gebildet sein kann, und dazu dient, das zweite Kontaktelement 25 in das Gehäuse einzubringen. Die aus Figur 4 erkennbare Struktur ist in spiegelsymmetrischer Weise in der Gehäusewandung 2 entsprechend ausgebildet. Insoweit wird auf die nachfolgende Beschreibung verwiesen.

Bei der dargestellten Ausführungsform hat das Gehäuse im Wesentlichen L-förmige Gestalt, wobei die mit 13 bezeichnete Aufnahmesäule bei einer bevorzugten Ausführungsform weggelassen werden kann, insbesondere wenn das erste Kontaktelement 22 keinen gekröpften Abschnitt 23 aufweist, sondern stattdessen ein flexibles Anschlusskabel.

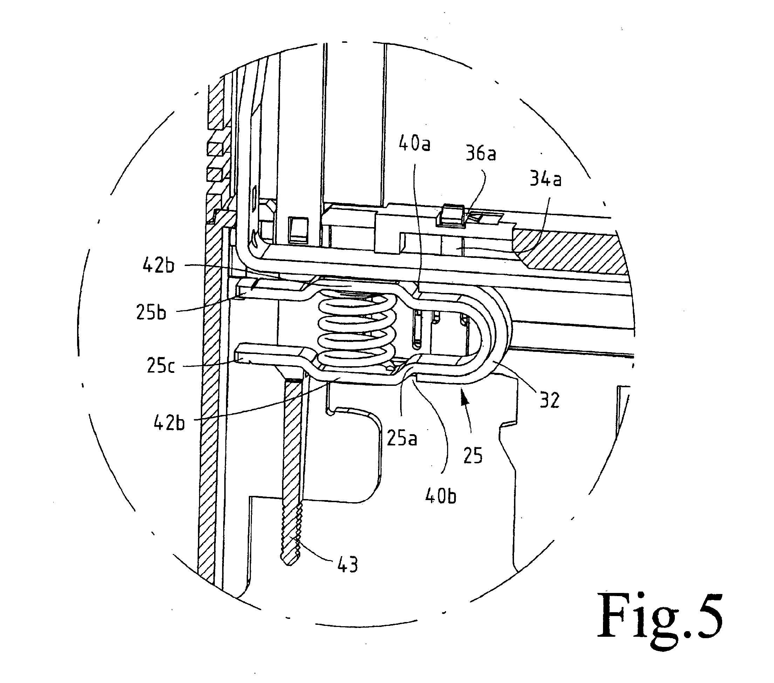

Die Figuren 5 bis 7 zeigen eine bevorzugte Ausführungsform des zweiten Kontaktelements 25. Figur 5 zeigt den Einsatz des zweiten Kontaktelements 25 zusammen mit einem Teil des Gehäuses 1, wobei das zweite Kontaktelement 25 an einer Position in das Gehäuse 1 eingesetzt ist, die der in Figur 2 gezeigten Darstellung entnehmbar ist, zur Kontaktierung der Stromschiene 16. Die Stromschiene 16 ist in Figur 5 zur besseren Darstellung nicht gezeigt. Gemäß Figur 5 bis 7 weist das zweite Kontaktelement 25 ein Aufnahmegehäuse 32 auf, welches aus Kunststoff oder einem anderen isolierenden Material besteht und in welchen der Kontakt 25a eingesetzt ist. Das Aufnahmegehäuse 32 ist entsprechend Figur 5 bis 7 mit Rastmitteln versehen, die bei der dargestellten Ausführungsform durch zwei Füße 34a, 34b gebildet sind und von dem Aufnahmegehäuse 32 vorzugsweise senkrecht nach oben abstehen. Figur 5 zeigt den Zustand des zweiten Kontaktelementes 25 vor der endgültigen Verrasterung gegenüber dem Gehäuse, das heißt der Fuß 34a befindet sich unterhalb einer Rastaufnahme 36a, vorzugsweise in Form einer Durchbrechung, durch welche der Fuß 34a in Figur 5 nach oben durchgeführt werden kann, wonach der Fuß 34a gegenüber dem Gehäuse verrastet wird und in dieser Position das zweite Kontaktelement 25 gegenüber dem Gehäuse 1 arretiert wird. Gleiches gilt für den anderen Fuß 34b und die Rastaufnahme 36a. Die Rastaufnahmen 36a, 36b, vorzugsweise in Form von Durchbrechungen, sind in Figur 1 in Bezug auf die in Figur 2 und 5 gezeigte Position dargestellt. Entsprechende Rastaufnahmen befinden sich in der oberen Gehäusewand 4 für die weiteren drei Positionen, die der Übersichtlichkeit halber aber nicht weiter bezeichnet sind. Die die Rastaufnahmen 36a, 36b bildenden Durchbrechungen oder Öffnungen sind in der oberen Gehäusewand 4 in einem Abstand zueinander vorgesehen, der dem Abstand der Füße 34a, 34b entspricht. Weiterhin können bei einer bevorzugten Ausführungsform auf der zu den Füßen 34a, 34b abgewandten Seite Fußabschnitte 38a, 38b vorgesehen sein, die eine kürzere Länge als die Füße 34a, 34b aufweisen und in einem Abstand zueinander vorgesehen sind, der etwa der Breite des ersten Kontaktelementes 22 entspricht, sodass diese Fußabschnitte 38a, 38b als Führung gegenüber dem ersten Kontaktelement 22 dienen, welches gemäß einer bevorzugten Ausführungsform in Folge einer an der Unterseite der oberen Gehäusewand 4 befindlichen Rippe in Abstand zu der oberen Gehäusewand liegend gehalten wird. Auf diese Weise wird gewährleistet, dass das zweite Kontaktelement 25 nach seiner Einführung in das Innere des Gehäuses 1 entlang dem ersten Kontaktelement 22 verschoben werden kann, um an einer Stelle positioniert zu werden, die der Kontaktierung einer der Stromschienen entspricht, wonach dann das zweite Kontaktelement 25 unter Ausnutzung der Nutabschnitte 29a bis 29d fixiert wird, indem z. B. nach Figur 5 das zweite Kontaktelement 25 nach oben senkrecht zum ersten Kontaktelement 22 soweit verlagert wird, bis die Füße 34a, 34b in die korrespondierenden Rastaufnahmen 36a, 36b, vorzugsweise in Form von Durchbrechungen eingeführt sind. Eine zahnförmige Ausbildung der Enden der Füße 34a, 34b gewährleistet ein Einrasten der Füße 34a, 34b gegenüber der oberen Gehäusewand 4.

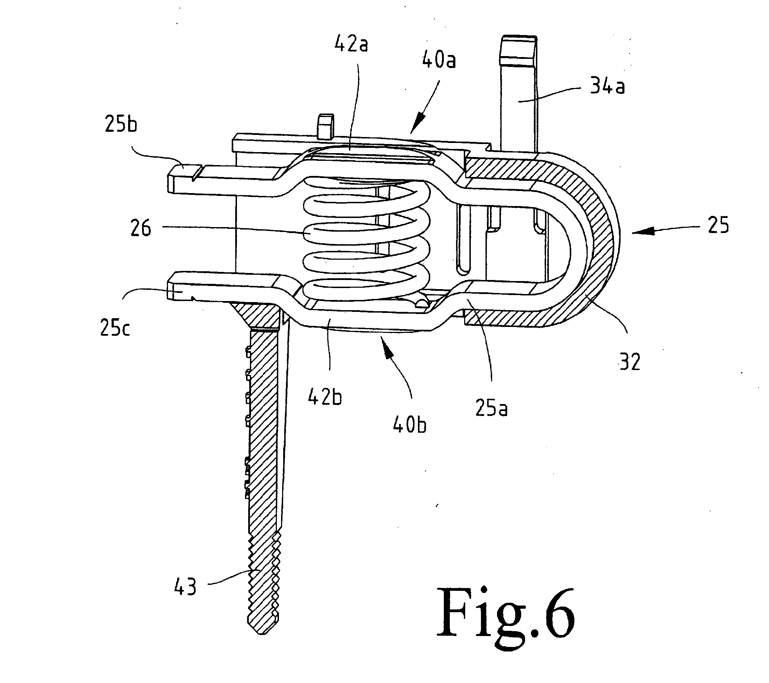

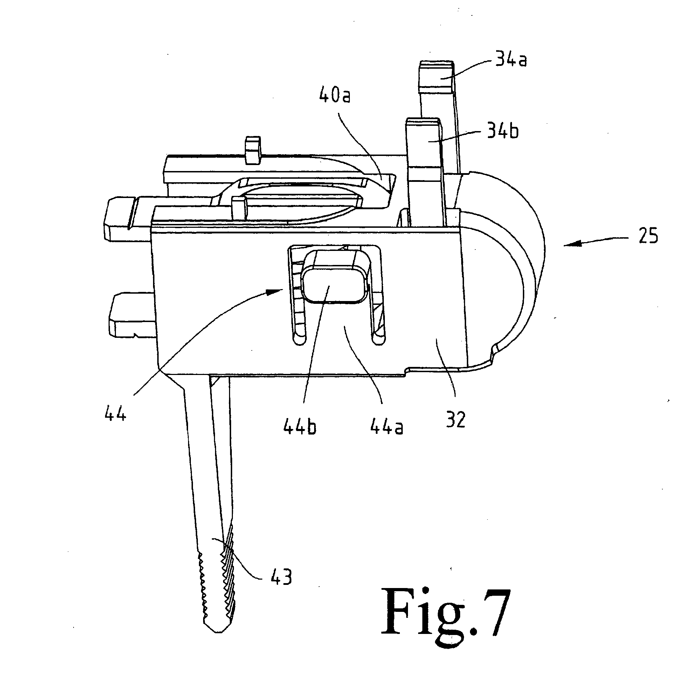

Bei einer bevorzugten Ausführungsform entsprechend Figur 6 ist das Aufnahmegehäuse 32 an seiner oberen Seite und seiner unteren Seite mit Öffnungen 40a, 40b versehen, wie dies deutlich aus Figur 6 und 7 erkennbar ist. Durch diese Öffnungen 40a, 40b tritt jeweils ein Kontaktabschnitt 42a, 42b des Kontaktes 25a aus dem Aufnahmegehäuse 32 heraus, wodurch die Kontaktierung gegenüber dem ersten Kontaktelement 22 und der jeweils zugehörigen Stromschiene 16 bis 20 sichergestellt ist. Die Kontaktabschnitte 42a, 42b werden durch Federmittel vorzugsweise in Form einer Schraubenfeder 26 auseinandergespreizt, soweit dies erforderlich ist, wobei sichergestellt sein muss, dass die Kontaktabschnitte 42a, 42b geringfügig über das Aufnahmegehäuse 32 heraustreten, um die vorstehend erwähnte elektrische Kontaktierung zu gewährleisten.

Aus den Figuren 5 bis 7 ist ersichtlich, dass der Kontakt 25a zwar im Wesentlichen U-förmige Gestalt besitzt, dass aber die Kontaktabschnitte 42a, 42b aus dieser U-förmigen Gestaltung herausgebogen oder ausgebaucht sind und einen größeren Abstand zueinander einhalten als die Endabschnitte 25b, 25c des Kontaktes 25a. Damit wird auch erreicht, dass der Kontakt 25a nach seinem Einschieben in das Aufnahmegehäuse 32 fest innerhalb diesem Aufnahmegehäuse 32 verbleibt.

Zur Betätigung des zweiten Kontaktelementes 25 dient ein am Aufnahmegehäuse 32 ausgebildeter Griff 43, der vom Aufnahmegehäuse 32 vorzugsweise senkrecht nach unten absteht und die Verschiebung bzw. das Erfassen des zweiten Kontaktelementes 25 entlang dem ersten Kontaktelement 32 ermöglicht.

An der Außenfläche des zweiten Kontaktelements 25 ist eine Führungseinrichtung 44 vorgesehen, die bei der dargestellten Ausführungsform durch einen zungenartig ausgeschnittenen Steg 44a mit einem daran ausgebildeten Vorsprung 44b gebildet wird. Der Steg 44a ist an dem Aufnahmegehäuse 32 angesetzt und durch U-förmige Schlitze flexibel gestaltet. Auf dem Ende des Stegs 44 a befindet sich der Vorsprung 44b, vorzugsweise in Form einer Halbkugel. Die gleiche Anordnung befindet sich auf der in Figur 7 nicht erkennbaren, gegenüberliegenden Seite des Aufnahmegehäuses 32.

Die zur Führungseinrichtung 44 komplementären Teile werden durch die Führungsaufnahme 28 gebildet, wobei die Führungseinrichtung 44 und die Führungsaufnahme 28 aufeinander abgestimmt sind. Die Führungseinrichtung 44 wird entlang der Nut 28 verlagert und in einen der Nutabschnitte 29a bis 29d eingeführt, abhängig von der gewünschten Position des zweiten Kontaktelements 25. Entsprechend können die Nutabschnitte 29a bis 29d halbkugelförmige Aufnahmen bilden, um den halbkugelförmigen Vorsprung 44b rastend aufzunehmen. Durch diese Gestaltung ist es möglich, das zweite Kontaktelement 25 nach seiner Einführung in das Gehäuseinnere, was über die Einführungsnuten 30 möglich ist, in seine Betriebsposition verlagert wird, indem die Führungseinrichtung 44 durch ein Paar von Einführungsnuten 30 in die Nuten 28 verbracht wird. Danach wird das zweite Kontaktelement 25 entlang der Nuten 28 verschoben, um dann durch einen der Nutabschnitte 29a bis 29d in die Endposition verbracht zu werden, in welcher die Füße 34a, 34b durch die Rastaufnahmen 36a, 36b verlagert wird. Die Nuten 28 befinden sich an den Innenflächen der beiden Seitenwände 2, 3 einander gegenüberliegend, entsprechend auch die Einführungsnuten 30.

Bei einer abgewandelten Ausführungsform der Erfindung ist vorgesehen, dass die auf beiden Seiten des Aufnahmegehäuses 32 befindlichen Führungseinrichtungen 44 unterschiedlich groß gewählt sind, entsprechend sind die in den beiden Gehäusewandungen 2, 3 ausgebildeten Einführungsnuten 30 und Nuten 28 unterschiedlich groß gestaltet, mit dem Ziel, dass ein verdrehtes Einsetzen des zweiten Kontaktelementes verhindert wird.

Das Einführen des zweiten Kontaktelementes 25 erfolgt dadurch, dass nach Bereitstellung des Gehäuses 1 das zweite Kontaktelement 25 an einer vorgegebenen Stelle, die durch die Einführungsnuten 30 bestimmt ist, in das Gehäuse hineingedrückt wird, wonach dann die Führungseinrichtungen 44 entlang der zueinander parallelen Nuten 28 in den Seitenwandungen 2, 3 des Gehäuses 1 gleiten können, um das zweite Kontaktelement 25 entlang der Nuten 28 bis zu einer Position zu verschieben, in welcher das zweite Kontaktelement 25 in der vorstehenden Weise zur Kontaktierung einer der Stromschienen 16 bis 20 dadurch verrastet wird, dass das zweite Kontaktelement 25 in Richtung auf die obere Gehäusewand 4 soweit verschoben wird, bis die beiden Füße 34a, 34b in zugehörige Rastaufnahmen 36a, 36b verlagert und verrastet sind.

Bei einer weiteren Ausführungsform der Erfindung ist in dem Gehäuse 1 ein Sperrglied 46 verschiebbar angeordnet. Das Sperrglied 46 ist vorzugsweise in einer senkrecht zur Längsachse des Gehäuses 1 verlaufenden Führung 47 verstellbar vorgesehen (Figur 3 und Figur 4) und ist vorzugsweise an einem Ende des Gehäuses 1 angeordnet, wie dies aus Figur 3 und Figur 4 erkennbar ist. Nach dem Aufsetzen des Gehäuses 1 auf die Stromschienen 16 bis 20 wird das Gehäuse 1 durch Verlagerung des Sperrgliedes 46 in Figur 3 und Figur 4 nach unten soweit verlagert, dass sein Ende an einer Seitenkante der Stromschiene 20 zur Anlage gelangt, wonach das Gehäuse 1 gegen eine Verschiebung gegenüber den Stromschienen 16 bis 20 gesperrt ist, da die einzelnen Füße 8 bis 11 und 8' bis 11' die jeweiligen Stromschienen kraftschlüssig untergreifen und teilweise umfassen. Die Anzahl der Füße 8 bis 11, 8' bis 11' muss, wie Fig. 2 zeigt, nicht gleich der Anzahl der Stromschienen sein.

Die Rastaufnahmen 36a, 36b, vorzugsweise in Form von Durchbrechungen, dienen der Bedienungsperson zugleich als Indikator dafür, an welcher Position das zweite Kontaktelement in das Gehäuse eingesetzt ist.

Durch die zahnförmige Ausbildung der Enden der Füße 34a, 34b ist ein Rasteingriff der Füße 34a, 34b gegenüber der oberen Gehäusewandung 4 sichergestellt. Um das zweite Kontaktelement 25 aus einer einmal eingesetzten Position zu entfernen, kann mittels eines Schraubenziehers oder einem anderen Werkzeug die Entrastung der Füße 34a, 34b vorgenommen werden, falls es erwünscht ist, das zweite Kontaktelement entweder zu entfernen oder entlang des Gehäuses 1 zu einer anderen Position zu verschieben.

Wie aus Figur 1 ersichtlich ist, sind an den Außenflächen der seitlichen Gehäusewandungen 2, 3 gemäß einer bevorzugten Ausführungsform Kupplungsmittel 48, 49 vorgesehen, um mehrere derartige einpolige Adapter zu einem Adaptermodul zusammensetzen zu können, welches als gemeinsame Gruppe, beispielsweise bestehend aus fünf Einzeladaptern, ein Stromsammelschienensystem zu kontaktieren, welches fünf Stromschienen umfasst, wie dies beispielsweise aus Figur 2 und 3 ersichtlich ist. Bei der Ausführungsform nach Figur 1 bestehen die Kupplungsmittel 48, 49 beispielsweise aus Öffnungen, die eine Rastverzahnung beinhalten können. Das gegenüberliegende Kupplungsmittel des anschließenden Adapters ist bei dieser Ausführungsform mit zahnförmigen Vorsprüngen gebildet, wobei die Kupplungsmittel insgesamt unterschiedlicher und bekannter Ausbildung sein können. Abhängig von der Konzipierung der Stromschienen, die gemäß Figur 2 und 3 hochkant oder horizontal liegend ausgebildet sein können, sind die Längen der Füße 8 bis 11 bzw. 8' bis 11' konzipiert.

Das Gehäuse 1 ist vorzugsweise einteilig gefertigt und enthält das erste Kontaktelement 22 in Form einer Schiene. Derartige Adaptermodule sind auf mindestens drei-, vier- oder fünf-polige Schienensysteme aufsetzbar, wobei die Füße 8 bis 11, 8' bis 11' die jeweiligen Stromschienen in der Betriebsposition hintergreifen. Bei der dargestellten Ausführungsform kann das Kontaktelement 25 nach seinem Einführen in das Gehäuse 1 entlang dem ersten Kontaktelement 22 und somit entlang der Längsachse des Gehäuses 1 verlagert werden, bis es an einer vorgegebenen Position in Figur 1 bis 3 nach oben in die endgültige Betriebsstellung gedrückt wird. Entsprechend der Zahl der Stromschienen sind in der oberen Wandung 4 des Gehäuses 1 eine entsprechende Zahl von Paaren von Durchbrechungen 36a, 36b ausgebildet, die als Rastaufnahme für das zweite Kontaktelement 25 an der vorgegebenen Betriebsposition dienen.

Bei einer weiteren, bevorzugten Ausführungsform ist an der durch die Säule 14 gebildeten Vorderseite ein Sichtfenster 51 vorgesehen, durch welches ein Einblick in das Gehäuseinnere erfolgen kann und wodurch es möglich ist zu erkennen, an welcher Position sich das zweite Kontaktelement befindet.

Die Erfindung schafft vorzugsweise einen einpoligen Adapter, bei dem im Lieferzustand ohne Aufwand das zweite Kontaktelement 25 in die gewünschte Betriebsposition verbracht werden kann. Ein Zurückversetzen des zweiten Kontaktelementes 25 lässt sich vorzugsweise nur mittels eines Werkzeuges ermöglichen. Zur Verbesserung der Sichtbarkeit der Position des zweiten Kontaktelementes 25 kann das Gehäuse 1 mit einem Indikator versehen sein, der über das Sichtfenster 51 erkennen lässt, welche Stromschiene kontaktiert wird.

Bei den dargestellten Ausführungsformen sind die in dem Aufnahmegehäuse 32 ausgebildeten Öffnungen 40a, 40b entsprechend Figur 5 in Vertikalrichtung vorzugsweise fluchtend vorgesehen, sodass die Kontaktabschnitte 42a, 42b des U-förmigen Kontaktes 42 symmetrisch zueinander vorgesehen sind.

Die Einführungsnuten 30 an den Innenflächen der Seitenwände 2, 3 der Gehäuse gehen entsprechend Figur 1 ff. von jeder Nut 28 weg und verlaufen bis zur Unterkante der jeweiligen Seitenwände 2, 3. Die Nuten 28 erstrecken sich in Richtung der Längsachse des Gehäuses 1 über eine Länge, die auf die Positionierungsstellen des zweiten Kontaktelements 25 abgestimmt ist.

Wie aus vorstehender Beschreibung ersichtlich, weist das Aufnahmegehäuse 32 des zweiten Kontaktelementes 25 zwei einander gegenüberliegende Seitenwände auf, an welchen jeweils die Führungseinrichtung 44 vorgesehen ist.

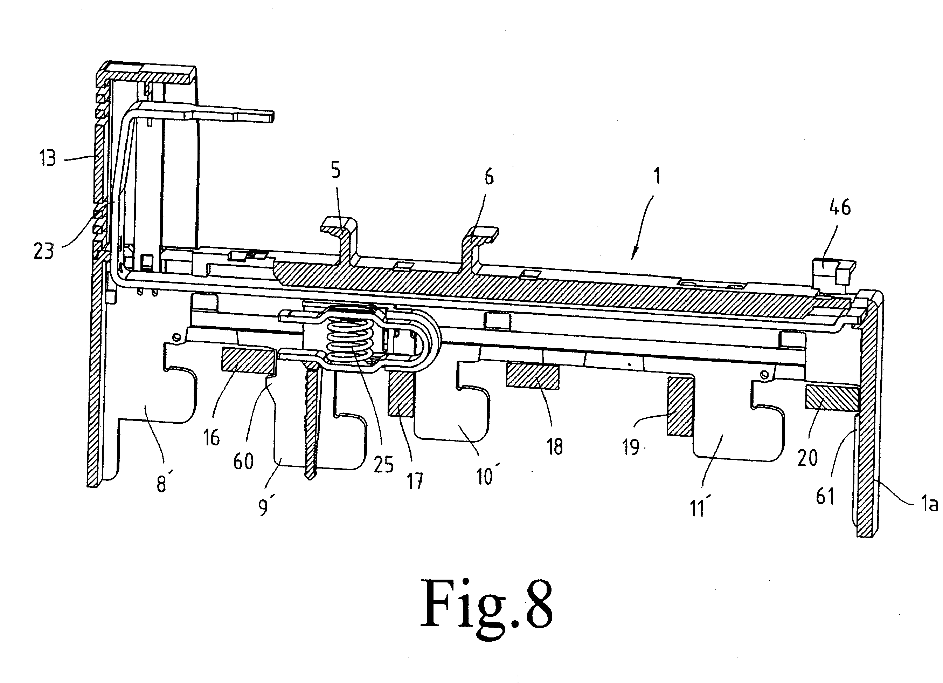

Figur 8 zeigt eine Darstellung einer bevorzugten Ausführungsform des erfindungs-gemäßen Adapters entsprechend Figur 1, jedoch in Schnittansicht. Gleiche Teile gegenüber den vorangehenden Figuren sind mit gleichen Bezugszeichen versehen.

Bei der Ausführungsform nach Figur 8 ist an den Füßen 9, 9' ein Ansatz 60, vorzugsweise nasenförmiger Gestalt angebracht, der an einer Position des Fußes 9 bzw. 9' vorgesehen ist, die eine Distanz zum Gehäuse 1 aufweist, welche der Stärke der Stromschiene 16 entspricht. Der Ansatz 60 kann auch durch eine vertikal an den Füßen 9 bzw. 9' verlaufende Rippe oder dergleichen gebildet sein.

An dem Gehäuse 1 ist weiterhin, wie aus Figuren 1 und 8 ersichtlich, eine Abschottwand 1a vorgesehen, die vorzugsweise Bestandteil des Gehäuses 1 ist und vertikal vom Gehäuse 1 nach unten abstrebt, sodass von der Seite der Abschottwand 1a her im Betriebszustand kein Zugriff zu den Stromschienen erlaubt wird. An der nach innen weisenden Seite ist die Abschottwand 1a mit einem Ansatz 61 versehen, der nasenförmig oder gemäß Figur 8 in Form einer vertikal an der Abschottwand 1a verlaufenden Rippe ausgebildet ist und entsprechend dem Ansatz 60 eine Distanz zum Gehäuse 1 aufweist, die etwa der Stärke der Stromschiene 20 entspricht.

Adapter der beschriebenen Art werden im Regelfall durch eine Kombination von drei Adaptern plus einem Adapter für den N-Leiter zusammengesetzt, d. h. es wird ein Modul aus insgesamt vier einzelnen Adaptern verwendet. Für Messzwecke müssen diese ein Modul bildenden Adapter des Öfteren von den jeweiligen Stromschienen 16, 17 usw. getrennt werden. Um zu vermeiden, dass die Leitungen bzw. Anschlüsse zu den auf dem Adapter befindlichen Geräten entfernt werden müssen, schiebt die Bedienungsperson das vierpolige Modul nach oben, d. h. in Figur 8 horizontal nach links, wodurch die Stromschienen 16, 17 usw. außer Eingriff zu den eine Klemmfunktion ausübenden Füßen kommen. Das aus den Adaptern bestehende Modul wird in eine sogenannte Parkposition verbracht, sodass die einzelnen Kontaktelemente 25 gegenüber der jeweiligen Stromschiene eine solche Distanz einhalten, dass ein Stromfluss zwischen der zugehörigen Stromschiene und dem jeweiligen Kontaktelement 25 ausgeschlossen ist. In einer solchen Parkposition untergreifen die Ansätze 60, 61 eine jeweils zugehörige Stromschiene 16 bzw. 20, was zur Folge hat, dass das gesamte Gehäuse nicht unbeabsichtigt komplett von den Stromschienen 16 bis 20 abgehoben werden kann, sondern in der Parkposition verbleibt.

Das Vorsehen der Ansätze 60, 61 ist nicht auf die Füße 9 bzw. 9' und die Abschottwand 1a beschränkt, vielmehr können die Ansätze zusätzlich oder alternativ an den Füßen 10 bzw. 10', 11 bzw. 11' in entsprechender Position vorgesehen sein.

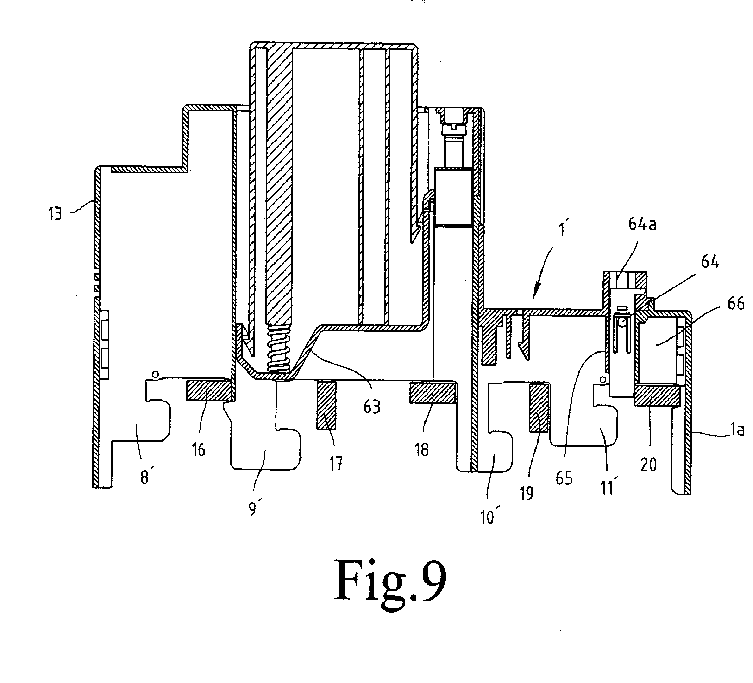

Bei einer weiteren Ausführungsform eines Adapters, der in Figur 9 in Schnittdarstellung gezeigt ist, handelt es sich vorzugsweise um einen Adapter für den N-Leiter. Der in Figur 9 dargestellte Adapter ist bei dieser Ausführungsform mit einem festen Kontaktelement 63 ausgerüstet, welches im Betriebszustand den zugehörigen N-Leiter kontaktiert. Alternativ hierzu kann der Adapter entsprechend den Figuren 1 bis 8 gestaltet sein mit einem verstellbaren Kontaktelement 25. Wesentlich ist, dass der Adapter für den N-Leiter gemäß einer bevorzugten Ausführungsform mit einer Rasteinrichtung 64 versehen ist, die quer zur Längsachse des Gehäuses 1 verstellbar ist und bei Einnehmen der Parkposition des aus einzelnen Adaptern bestehenden Moduls entsprechend Figur 8 in Figur 9 nach "unten" verlagerbar ist, um zum Beispiel seitlich zur Stromschiene 20 in Anlage zu gelangen, wodurch eine Verlagerung des Gehäuses 1 in Längsrichtung des Gehäuses 1' aus der genannten Parkposition heraus verhindert wird. Die Rasteinrichtung 64 besteht bei der Ausführungsform nach Figur 9 aus einem Stift, der innerhalb einer quer zur Gehäuseachse verlaufenden Führung 65 verlagerbar ist, und zwar so weit, dass entsprechend Figur 9 zumindest ein Teil der zugehörigen Stromschiene 20 seitlich übergriffen wird. Nach dem Zurückfahren der Rasteinrichtung 64 so weit, dass die Stromschiene 20 freigegeben wird, lässt sich das Gehäuse 1 in Figur 1 nach rechts, d. h. nach "unten" auf die gesamten Stromschienen aufschieben.

Hinsichtlich des Begriffs "oben" und "unten" wird bemerkt, dass das Gehäuse 1 typischerweise entgegen den Figuren 1 bis 9 um 90° im Uhrzeigersinn verdreht auf die in einer vertikalen Ebene verlaufenden Stromschienen aufgesetzt wird. Typischerweise sind die Stromschienen in einer vertikalen Anordnung in einem Schrank oder dergleichen vorgesehen. Dies bedeutet, dass die Adapter, einzeln oder als Module zusammengesetzt, von oben auf die Stromschienen aufgesetzt und nach unten zum Eingriff mit den Füßen 9, 9' usw. verschoben werden.

Bezüglich der Ausführungsform nach Figur 9 sei bemerkt, dass die Rasteinrichtung 64 mit der zugehörigen Führung 65 auch bei den in Figuren 1 bis 8 dargestellten Modulen vorgesehen sein kann und daher nicht ausschließlich bei dem Adapter für den N-Leiter gemäß Figur 9 vorgesehen sein muss.

Die vorzugsweise durch einen Stift gebildete Rasteinrichtung 64 wird aus der in Figur 9 gezeigten Arretierposition vorzugsweise mit Hilfe eines Schraubenziehers aus der Arretierposition verlagert, indem der Schraubenzieher durch eine mit 66 bezeichnete Öffnung oberhalb der Abschottwand 1a eingeführt wird und einen mit 64a bezeichneten Kopf der Rasteinrichtung 64 untergreift.

Eine derartige Rasteinrichtung 64 kann auch einen Adapter gemäß den Figuren 1 bis 7 vorgesehen sein, falls dies erwünscht ist.

Um die aus vorzugsweise mehreren Adaptern bestehenden Module in der Betriebsposition sicher zu fixieren bzw. zu halten, werden vorzugsweise sämtliche an den Adaptern vorgesehenen Sperrglieder 46 aktiviert bzw. in Richtung auf die Stromschienen gedrückt, während die Rasteinrichtung 64 gemäß Figur 9 in der Betriebsposition des Adapters funktionslos bleibt.

## Patentansprüche

1. Adapter zur Aufnahme elektrischer Installationsgeräte und zur Befestigung auf einem Stromschienensystem, mit einem Gehäuse (1) aus Kunststoff, welches eine obere Gehäusewand (4) aufweist, an welcher Mittel (5, 6) zur Halterung eines elektrischen Installationsgerätes (15) vorgesehen sind,
mit Füßen (8 - 11, 8' - 11') zur klemmenden Befestigung an dem Stromschienensystem,
mit einem ersten Kontaktelement (22) zum Anschluss des elektrischen Installationsgerätes (15), wobei das erste Kontaktelement (22) zumindest weitgehend innerhalb des Gehäuses (1) verläuft,
und mit einem mit dem ersten Kontaktelement (22) elektrisch verbundenen zweiten Kontaktelement (25) zur Kontaktierung jeweils einer der Stromschienen (16 - 20) eines Stromschienensystems,
**dadurch gekennzeichnet, dass** das Gehäuse (1) eine Führungsaufnahme (28) aufweist, entlang welcher das zweite Kontaktelement (25) innerhalb des Gehäuses (1) verschiebbar vorgesehen ist,
dass das zweite Kontaktelement (25) eine Führungseinrichtung (44), die entlang der Führungsaufnahme (28) verlagerbar ist, sowie Rastmittel (34a, 34b) aufweist, und
dass an vorbestimmten Rastpositionen des Gehäuses (1) Rastaufnahmen (36a, 36b) vorgesehen sind, mit welchen die Rastmittel (34a, 34b) des zweiten Kontaktelementes (25) in Eingriff bringbar sind.

2. Adapter nach Anspruch 1,
**dadurch gekennzeichnet, dass**
das erste Kontaktelement (22) eine Kontaktschiene beinhaltet, die in dem Gehäuse (1) unterhalb der oberen Gehäusewand (4) verläuft und mit einer Anschlusseinrichtung (23) versehen ist.

3. Adapter nach Anspruch 1 oder 2,
**dadurch gekennzeichnet, dass**
das zweite Kontaktelement (25) ein Aufnahmegehäuse (32) aufweist, an welchem die Führungseinrichtung (44) ausgebildet ist,
dass die Führungsaufnahmen (28) an den Innenflächen der Seitenwände (2, 3) des Gehäuses (1) vorgesehen sind, entlang welchen das zweite Kontaktelement (25) mittels seiner Führungseinrichtung (44) verschiebbar ist.

4. Adapter nach einem der vorangehenden Ansprüche,
**dadurch gekennzeichnet, dass**
das Aufnahmegehäuse (32) des zweiten Kontaktelementes (25) wenigstens zwei Öffnungen (40a, 40b) aufweist,
dass in dem Aufnahmegehäuse (32) Kontaktabschnitte (42a, 42b) eines Kontaktes (25a) des zweiten Kontaktelementes (25) angeordnet sind und aus dem Aufnahmegehäuse (32) zumindest teilweise herausragen.

5. Adapter nach wenigstens einem der vorangehenden Ansprüche,
**dadurch gekennzeichnet, dass**
die Führungsaufnahmen (28) als entlang der Innenflächen der Seitenwände (2, 3) des Gehäuses verlaufende Nuten gebildet sind und dass an den Rastpositionen des zweiten Kontaktelementes entsprechenden Stellen Nutabschnitte (29a - 29d) vorgesehen sind, die quer zur Führungsaufnahme (28) verlaufen, in welche die Führungseinrichtungen (44) des Aufnahmegehäuses (32) verlagerbar sind zur Positionierung des zweiten Kontaktelementes in einer vorgegebenen Betriebsposition.

6. Adapter nach Anspruch 5,
**dadurch gekennzeichnet, dass**
die Führungseinrichtungen (44) an Seitenwänden (32a) des Aufnahmegehäuses (32) ausgebildet sind.

7. Adapter nach Anspruch 6,
**dadurch gekennzeichnet, dass**
die Führungseinrichtung (44) auf einer Seite des Aufnahmegehäuses (32) unterschiedlich zur Führungseinrichtung (44) auf der anderen Seite des Aufnahmegehäuses (32) ausgebildet ist.

8. Adapter nach wenigstens einem der vorangehenden Ansprüche,
**dadurch gekennzeichnet, dass**
an dem Aufnahmegehäuse (32) ein von diesem abstrebender Griff (43) vorgesehen ist.

9. Adapter nach einem der vorangehenden Ansprüche,
**dadurch gekennzeichnet, dass**
die Rastmittel (34a, 34b) des zweiten Kontaktelements (25) durch mindestens ein Paar von Füßen (34a, 34b) gebildet sind, die von dem Aufnahmegehäuse (32) abstehen, und dass die Rastaufnahmen (36a, 36b) im Gehäuse (1) durch Durchbrechungen (14) in der oberen Gehäusewand (4) gebildet sind.

10. Adapter nach einem der vorangehenden Ansprüche,
**dadurch gekennzeichnet, dass**
die Führungseinrichtungen (44) des zweiten Kontaktelements (25) durch ausgeschnittene, flexible Stege (44a) gebildet sind, und dass auf dem jeweiligen Steg (44a) ein Vorsprung (44b) ausgebildet ist.

11. Adapter nach Anspruch 9,
**dadurch gekennzeichnet, dass**
die Rastmittel (34a, 34b) bildenden Füße an ihren Enden mit Rastzähnen versehen sind.

12. Adapter nach einem der vorangehenden Ansprüche,
**dadurch gekennzeichnet, dass**
an der unteren Fläche der oberen Wand (4) des Gehäuses (1) eine Rippe ausgebildet ist zur Beabstandung des ersten Kontaktelements (22) gegenüber der oberen Wandung (4).

13. Adapter nach einem der vorangehenden Ansprüche,
**dadurch gekennzeichnet, dass**
an dem Aufnahmegehäuse (32) zueinander beabstandete Fußabschnitte (38a, 38b) vorgesehen sind, deren Abstand größer ist als die Breite des ersten Kontaktelementes (22) und dass die Fußabschnitte (38a, 38b) zur Führung des zweiten Kontaktelementes (25) gegenüber dem ersten Kontaktelement vorgesehen sind.

14. Adapter nach wenigstens einem der vorangehenden Ansprüche,
**dadurch gekennzeichnet, dass**
die durch Nuten (28) gebildeten Führungsaufnahmen jeweils eine Einführungsnut (30) zum Einsetzen des zweiten Kontaktelementes (25) in das Gehäuse (1) aufweist.

15. Adapter nach wenigstens einem der vorangehenden Ansprüche,
**dadurch gekennzeichnet, dass**
an den Seitenwänden (2, 3) des Gehäuses (1) Kupplungseinrichtungen zum Verbinden mit einem weiteren Adapter vorgesehen sind.

16. Adapter nach wenigstens einem der vorangehenden Ansprüche,
**dadurch gekennzeichnet, dass**
eine Sperreinrichtung (46) im Gehäuse (1) in einer Führung (47) verschiebbar vorgesehen ist, um das Gehäuse (1) gegenüber dem Stromschienensystem zu verriegeln.

17. Adapter nach wenigstens einem der vorangehenden Ansprüche,
**dadurch gekennzeichnet, dass**
an zumindest einigen der Füße (8 - 11, 8' - 11') Ansätze (60, 61) vorgesehen sind, die mit einer Distanz zum Gehäuse (1) platziert sind, welche etwa der Stärke der betreffenden Stromschiene (16 - 20) entspricht.

18. Adapter nach wenigstens einem der vorangehenden Ansprüche,
**dadurch gekennzeichnet, dass**
an einer Außenwand (1a) des Gehäuses (1) ein Ansatz (61) ausgebildet ist, dessen Distanz zum Gehäuse etwa der Stärke der zugehörigen Stromschiene (16 - 20) entspricht

19. Adapter nach wenigstens einem der vorangehenden Ansprüche,
**dadurch gekennzeichnet, dass**
der Ansatz (60, 61) durch eine Rippe gebildet ist, die senkrecht zur Längsachse des Gehäuses (1) verläuft.

20. Adapter nach wenigstens einem der vorangehenden Ansprüche,
**dadurch gekennzeichnet, dass**
eine Rasteinrichtung (64, 66) vorgesehen ist, die in einer außerbetrieblichen Position des Adapters eine Arretierung gegenüber mindestens einer der Stromschienen (16 - 20) bewirkt.

## Claims

1. Adapter for receiving electrical installation devices and for fixing to a busbar system, comprising a housing (1) made of plastics material which comprises an upper housing wall (4) on which means (5, 6) for mounting an electrical installation device (15) are provided,
comprising feet (8-11, 8'-11') for fixing to the busbar system by clamping,
comprising a first contact element (22) for connecting the electrical installation device (15), the first contact element (22) extending at least largely inside the housing (1),
and comprising a second contact element (25), electrically connected to the first contact element (22), for contacting one of the busbars (16-20) of a busbar system in each case,
**characterised in that** the housing (1) comprises a guide recess (28), along which the second contact element (25) is provided displaceably within the housing (1),
**in that** the second contact element (25) comprises a guide device (44), which is movable along the guide recess (28), and latching means (34a, 34b), and
**in that** latch recesses (36a, 36b), with which the latching means (34a, 34b) of the second contact element (25) can engage, are provided at predetermined latching positions of the housing (1).

2. Adapter according to claim 1,
**characterised in that**
the first contact element (22) contains a contact rail, which extends in the housing (1) below the upper housing wall (4) and is provided with a connection device (23).

3. Adapter according to either claim 1 or claim 2, **characterised in that**
the second contact element (25) comprises a receiving housing (32) on which the guide device (44) is formed,
**in that** the guide recesses (28) are provided on the inner faces of the side walls (2, 3) of the housing (1), along which the second contact element (25) is displaceable by means of the guide device (44) thereof.

4. Adapter according to any one of the preceding claims, **characterised in that**
the receiving housing (32) of the second contact element (25) comprises at least two openings (40a, 40b),
**in that** contact portions (42a, 42b) of a contact (25a) of the second contact element (25) are arranged in the receiving housing (32) and project out of the receiving housing (32) at least in part.

5. Adapter according to at least one of the preceding claims, **characterised in that**
the guide recesses (28) are formed as grooves extending along the inner faces of the side walls (2, 3) of the housing and **in that** groove portions (29a-29d), which extend transverse to the guide recess (28) into which the guide devices (44) of the receiving housing (32) are movable to position the second contact element in a predetermined operating position, are provided at the latch positions of the second contact element.

6. Adapter according to claim 5,
**characterised in that**
the guide devices (44) are formed on side walls (32a) of the receiving housing (32).

7. Adapter according to claim 6,
**characterised in that**
the guide device (44) on one side of the receiving housing (32) is formed differently from the guide device (44) on the other side of the receiving housing (32).

8. Adapter according to at least one of the preceding claims, **characterised in that**
a handle (43) protruding away from the receiving housing (32) is provided thereon.

9. Adapter according to any one of the preceding claims, **characterised in that**
the latching means (34a, 34b) of the second contact element (25) are formed by at least one pair of feet (34a, 34b), which protrude away from the receiving housing (32), and **in that** the latching recesses (36a, 36b) in the housing (1) are formed by through-holes (14) in the upper housing wall (4).

10. Adapter according to any one of the preceding claims, **characterised in that**
the guide devices (44) of the second contact element (25) are formed by cut-out, flexible webs (44a), and **in that** a projection (44b) is provided on each web (44a).

11. Adapter according to claim 9,
**characterised in that**
the feet which form latching means (34a, 34b) are provided with latching teeth at the ends thereof.

12. Adapter according to any one of the preceding claims, **characterised in that**
a rib is formed on the lower face of the upper wall (4) of the housing (1) to space the first contact element (22) apart from the upper wall (4).

13. Adapter according to any one of the preceding claims, **characterised in that**
mutually spaced foot potions (38a, 38b) are provided on the receiving housing (32), the spacing thereof being greater than the width of the first contact element (22), and **in that** the foot portions (38a, 38b) are provided for guiding the second contact element (25) with respect to the first contact element.

14. Adapter according to at least one of the preceding claims, **characterised in that**
the guide recesses formed by grooves (28) each comprise an introduction groove (30) for inserting the second contact element (25) into the housing (1).

15. Adapter according to at least one of the preceding claims, **characterised in that**
coupling devices for connecting to a further adapter are provided on the side walls (2, 3) of the housing (1).

16. Adapter according to at least one of the preceding claims,
**characterised in that**
a blocking device (46) is provided displaceably in the housing (1) in a guide (47) so as to lock the housing (1) with respect to the busbar system.

17. Adapter according to at least one of the preceding claims, **characterised in that** shoulders (60, 61) are provided on at least some of the feet (8-11, 8'-11), and are placed at a distance from the housing (1) approximately corresponding to the thickness of the relevant busbar (16-20).

18. Adapter according to at least one of the preceding claims, **characterised in that**
a shoulder (61), the distance of which from the housing approximately corresponds to the thickness of the associated busbar (16-20), is formed on an outer wall (1a) of the housing (1).

19. Adapter according to at least one of the preceding claims, **characterised in that**
the shoulder (60, 61) is formed by a rib which extends perpendicular to the longitudinal axis of the housing (1).

20. Adapter according to at least one of the preceding claims, **characterised in that**
a latching device (64, 66) is provided, which brings about locking with respect to at least one of the busbars (16-20) in an out-of-operation position of the adapter.

## Revendications

1. Adaptateur pour la réception d'appareils d'installation électriques et pour la fixation sur un système de rails conducteurs, avec un boîtier (1) en plastique, qui présente une paroi de boîtier supérieure (4), sur lequel des moyens (5, 6) sont prévus pour le maintien d'un appareil d'installation électrique (15),
avec des pieds (8-11, 8'-11') pour la fixation par serrage sur le système de rails conducteurs,
avec un premier élément de contact (22) pour le raccordement de l'appareil d'installation électrique (15), le premier élément de contact (22) passant au moins dans une large mesure à l'intérieur du boîtier (1),
et avec un second élément de contact (25) raccordé électriquement au premier élément de contact (22) pour la mise en contact respectivement d'un des rails conducteurs (16 -20) d'un système de rails conducteurs,
**caractérisé par le fait que** le boîtier (1) présente un logement de guidage (28), le long duquel le second élément de contact (25) est prévu coulissant à l'intérieur du boîtier (1), que
le second élément de contact (25) présente un dispositif de guidage (44), qui peut être déplacé le long du logement de guidage (28), ainsi que des moyens d'encliquetage (34a, 34b), et que
des logements d'encliquetage (36a, 36b) sont prévus à des positions d'encliquetage prédéterminées du boîtier (1), avec lesquels les moyens d'encliquetage (34a, 34b) du second élément de contact (25) peuvent venir en prise.

2. Adaptateur selon la revendication 1,
**caractérisé par le fait que**
le premier élément de contact (22) comprend un rail de contact, qui passe dans le boîtier (1) sous la paroi de boîtier supérieure (4) et est pourvu d'un dispositif de raccordement (23).

3. Adaptateur selon la revendication 1 ou 2,
**caractérisé par le fait que**
le second élément de contact (25) présente un boîtier de logement (32), sur lequel est formé le dispositif de guidage (44),
que les logements de guidage (28) sont prévus sur les surfaces intérieures des parois latérales (2, 3) du boîtier (1), le long desquels le second élément de contact (25) est coulissant au moyen de son dispositif de guidage (44).

4. Adaptateur selon l'une quelconque des revendications précédentes,
**caractérisé par le fait que**
le boîtier de logement (32) du second élément de contact (25) présente au moins deux ouvertures (40a, 40b),
que des sections de contact (42a, 42b) d'un contact (25a) du second élément de contact (25) sont disposées dans le boîtier de logement (32) et font saillie au moins partiellement hors du boîtier de logement (32).

5. Adaptateur selon au moins l'une quelconque des revendications précédentes,
**caractérisé par le fait que**
les logements de guidage (28) sont constitués sous la forme de rainures passant le long des surfaces intérieures des parois latérales (2, 3) du boîtier et que des sections de rainure (29a-29d) sont prévues aux emplacements correspondant aux positions d'encliquetage du second élément de contact, qui passent transversalement au logement de guidage (28), dans lequel les dispositifs de guidage (44) du boîtier de logement (32) peuvent être déplacés vers le positionnement du second élément de contact dans une position de service prédéterminée.

6. Adaptateur selon la revendication 5,
**caractérisé par le fait que**
les dispositifs de guidage (44) sont formés sur des parois latérales (32a) du boîtier de logement (32).

7. Adaptateur selon la revendication 6,
**caractérisé par le fait que**
le dispositif de guidage (44) sur une face du boîtier de logement (32) est formé différemment du dispositif de guidage (44) sur l'autre face du boîtier de logement (32).

8. Adaptateur selon au moins l'une quelconque des revendications précédentes,
**caractérisé par le fait que**
une poignée (43) saillant hors de ce dernier est prévue sur le boîtier de logement (32).

9. Adaptateur selon l'une quelconque des revendications précédentes,
**caractérisé par le fait que**
les moyens d'encliquetage (34a, 34b) du second élément de contact (25) sont formés par au moins une paire de pieds
(34a, 34b), qui s'éloignent du boîtier de logement (32), et que les logements d'encliquetage (36a, 36b) sont formés dans le boîtier (1) par des percements (14) dans la paroi de boîtier supérieure (4).

10. Adaptateur selon l'une quelconque des revendications précédentes,
**caractérisé par le fait que**
les dispositifs de guidage (44) du second élément de contact (25) sont formés par des entretoises découpées et flexibles (44a), et qu'une avancée (44b) est formée sur chaque entretoise (44a).

11. Adaptateur selon la revendication 9,
**caractérisé par le fait que**
les pieds formant les moyens d'encliquetage (34a, 34b) sont pourvus à leurs extrémités de dents d'encliquetage.

12. Adaptateur selon l'une quelconque des revendications précédentes,
**caractérisé par le fait que**,
sur la surface inférieure de la paroi supérieure (4) du boîtier (1), une nervure est formée pour tenir le premier élément de contact (22) à distance de la paroi supérieure (4).

13. Adaptateur selon l'une quelconque des revendications précédentes,
**caractérisé par le fait que**
des sections de pied (38a, 38b) sont prévues à distance les unes des autres sur le boîtier de logement (32), dont la distance est supérieure à la largeur du premier élément de contact (22) et que les sections de pied (38a, 38b) sont prévues pour le guidage du second élément de contact (25) par rapport au premier élément de contact.

14. Adaptateur selon au moins l'une quelconque des revendications précédentes,
**caractérisé par le fait que**
les logements de guidage formés par des rainures (28) présentent respectivement une rainure d'introduction (30) pour insérer le second élément de contact (25) dans le boîtier (1).

15. Adaptateur selon au moins l'une quelconque des revendications précédentes,
**caractérisé par le fait que**
des dispositifs de couplage pour le raccordement à un autre adaptateur sont prévus sur les parois latérales (2, 3) du boîtier (1).

16. Adaptateur selon au moins l'une quelconque des revendications précédentes,
**caractérisé par le fait que**
un dispositif de blocage (46) dans le boîtier (1) est prévu coulissant dans un guidage (47), pour verrouiller le boîtier (1) par rapport au système de rails conducteurs.

17. Adaptateur selon au moins l'une quelconque des revendications précédentes,
**caractérisé par le fait que**
des épaulements (60, 61) sont prévus sur au moins certains des pieds (8-11, 8'-11'), qui sont placés à une certaine distance du boîtier (1) qui correspond approximativement à l'épaisseur du rail conducteur concerné (16-20).

18. Adaptateur selon au moins l'une quelconque des revendications précédentes,
**caractérisé par le fait que**
un épaulement (61) est formé sur une paroi extérieure (1a) du boîtier (1), dont la distance par rapport au boîtier correspond approximativement à l'épaisseur du rail conducteur associé (16-20).

19. Adaptateur selon au moins l'une quelconque des revendications précédentes,
**caractérisé par le fait que**
l'épaulement (60, 61) est formé par une nervure, qui passe perpendiculairement à l'axe longitudinal du boîtier (1).

20. Adaptateur selon au moins l'une quelconque des revendications précédentes,
**caractérisé par le fait que**
un dispositif d'encliquetage (66) est prévu, qui cause, dans une position de non-utilisation de l'adaptateur, un arrêt par rapport à au moins un des rails conducteurs (16-20).
